# EUROPÄISCHE PATENTANMELDUNG

(11) **EP 1 788 291 A2**
(43) Veröffentlichungstag der Anmeldung: **23.05.2007**
(21) Anmeldenummer: 06023300.4
(22) Anmeldetag: 09.11.2006
(51) Int. Cl.: F16L 17/04, F16L 19/12, F16L 21/06

(54) **Spannring einer spannbaren Rohrkupplung**

(30) Priorität: 17.11.2005 DE 102005055382
(71) Anmelder: Ilesic, Peter, 2000 Maribor (SI)
(72) Erfinder: Ilesic, Peter, 2000 Maribor (SI)
(74) Vertreter: Konnerth, Dieter Hans

(57) **Zusammenfassung**

Die Erfindung betrifft einen Spannring einer spannbaren Rohrkupplung zum axialen Verbinden zweier Rohre, wobei der in Umfangsrichtung unterteilte und aus metallischem Werkstoff hergestellte Spannring beim Schließen des Gehäuses der Rohrkupplung mittels einer an seinem Innenrand gebildeten Kante in einen Halteeingriff an der Außenseite des zugeordneten Rohres verspannbar ist, wobei dass der Spannring Öffnungen (22) aufweist, die benachbart zu seinem Innenrand (18) und über seinen Umfang verteilt angeordnet sind, und das Material des Spannrings an den Öffnungen (22) durch Drücken verformt und verfestigt ist.

## Beschreibung

Die Erfindung betrifft einen Spannring einer spannbaren Rohrkupplung mit den Merkmalen des Oberbegriffs des Anspruchs 1 sowie ein Verfahren zum Herstellen eines derartigen Spannringes.

Beim Schließen und verengenden Verspannen des Gehäuses einer z. B. aus der DE 44 08 743 C2 bekannten Rohrkupplung mit einer darin enthaltenen Dichtungsmanschette an den Rohren einer Rohrleitung verbleibt üblicherweise ein Spalt zwischen den Abschlußwänden des Gehäuses und der jeweiligen Rohrwand. Durch diesen Spalt kann Verschmutzung zu der elastomeren Dichtungsmanschette gelangen und sie kann UV-Strahlung, Ozon oder anderen schädlichen äußeren Einflüssen ausgesetzt sein, was zu einer Verschlechterung der elastomeren Werkstoffeigenschaften und zu Undichtigkeiten führen kann.

Um diesen Nachteil zu beheben, ist in der DE 296 08 499 U1 eine Rohrkupplung für Rohrleitungen vorgeschlagen geworden, die entsprechend der DE 44 08 743 C2 eine elastomere Dichtungsmanschette enthält, die in einem schließbaren Gehäuse mit radialen Endwänden angeordnet ist und zwei axial beabstandete und radial einwärts hervorstehende Ringwülste zum abdichtenden Anlegen an eine Rohrleitung aufweist. Jede Stirnseite der Dichtungsmanschette ist zur Längsachse der Rohrkupplung hin einwärts geneigt. An der Stirnseite liegt ein konischer, am Umfang unterteilter Spannring an, der sich axial und radial am Gehäuse abstützt und beim verengenden Schließen des Gehäuses und Verspannen der Dichtungsmanschette am jeweiligen Rohr der Rohrleitung anliegt. Gemäß einem Ausführungsbeispiel weist jeder Spannring einen scharfkantigen Innenrand zum Bilden eines axial festgelegten Eingriffs mit dem jeweiligen der beiden zu kuppelnden Rohre auf. Zusätzlich kann jeder Spannring an seinem Innenrand mit einer Vielzahl von voneinander beabstandeten Einkerbungen versehen sein.

Aus der EP 0 931 966 B1 ist eine Rohrkupplung mit einem Spannring bekannt geworden, der einen mit Zähnen gebildeten Innenrand aufweist. In die Außenseite jedes Zahns ist in der Nähe des freien Zahnendes wenigstens eine Vertiefung eingedrückt, durch die das Material des Zahnes auf dieser Zahnseite zum freien Zahnende hin verdrängt ist. Die Zähne werden durch die Verdrängung des Zahnmaterials beim Ausbilden der Vertiefung schärfer zugespitzt. Des weiteren wird durch das Eindrücken der Vertiefungen das Material der Zähne im Bereich der Vertiefungen verdichtet und dadurch gleichzeitig verfestigt.

Aus der DE 103 57 382 A1 ist ein Spannring einer spannbaren Rohrkupplung bekannt geworden, der mittels seines zahnartig gebildeten Innenrandes oder mittels an seinem Innenrand gebildeter Zähne in einen Halteeingriff an der Außenseite des zugeordneten Rohres verspannt wird, wobei zum Verbessern der Festigkeitseigenschaften des Spannringes vorgesehen ist, dass in den Spannring voneinander beabstandete Vertiefungen eingedrückt sind und dass das Material des Spannringes von den Vertiefungen in die Zwischenabschnitte zwischen den Vertiefungen verdrängt ist, so dass an dem vor der Verformung ungezahnten Innenrand des Spannringes zahnartige Materialvorsprünge als Eingriffsstellen gebildet sind, oder dass in den Spannring in einem Zwischenzahnabschnitt zwischen zwei benachbarten Zähnen zumindest eine Vertiefung eingedrückt ist und das Material des Spannringes von der Vertiefung zu dem den Zahn aufweisenden Zahnabschnitt und/oder in den Zwischenzahnabschnitt verdrängt ist. Dieser Spannring weist somit eine unterbrochene Eingriffskante auf, die für einen sicheren Haltegriff an der Rohraußenseite nachteilig sein kann.

Der Erfindung liegt die Aufgabe zugrunde, einen Spannring mit den Merkmalen des Oberbegriffs des Anspruchs 1 zu schaffen, der im Hinblick auf seine Gestaltung und seine Festigkeitseigenschaften verbessert ist, sowie ein verbessertes Verfahren zu dessen Herstellung anzugeben.

Diese Aufgabe wird bei einem Spannring mit den Merkmalen des Oberbegriffs des Anspruchs 1 erfindungsgemäß dadurch gelöst, dass der Spannring Öffnungen aufweist, die benachbart zu seinem Innenrand und über seinen Umfang verteilt angeordnet sind, und dass das Material des Spannrings an den Öffnungen durch Drücken verformt und verfestigt ist. Durch die Öffnungen oder Löcher wird Material entfernt, so dass auch bei hartem Stahl oder Federstahl der Spannring durch Rollen hergestellt werden kann. Andererseits wird durch das Pressen oder Drücken das Material neben den Öffnungen und entsprechend der Anordnung der Öffnungen im Bereich des Innenrandes des Spannringes insbesondere in der Nähe des Innenrandes und seiner Eingriffskante verfestigt und damit widerstandsfähiger gemacht. Da die Öffnungen oder Löcher innerhalb des Spannringes vom Eingriffsrand entfernt sind und diese Materialschwächungen somit nicht als randseitige Vertiefungen oder Einkerbungen zwischen zwei Zähnen gebildet sind, bleibt eine stetige und kontinuierliche Eingriffskante erhalten, die einen besonders festen und dauerhaften Eingriff des Spannringes an der Außenseite eines Rohres ermöglicht.

Vorteilhafte Ausgestaltungen der Erfindung sind in den Unteransprüchen angegeben.

Die Öffnungen können über nahezu die gesamte Breite des Spannringes oder nur in einem Teilabschnitt benachbart zum Innenrand des Spannringes gebildet sein. Damit können bedarfsweise unterschiedliche Materialverstärkungsbereiche und Materialverfestigungszonen auch in Querrichtung des Spannringes hergestellt werden. Die Öffnungen können in Draufsicht als längliche Streifen oder als runde oder elliptische Bereiche oder auch in anderer Form gebildet sein. Grundsätzlich kann die Größe und Verteilung bzw. Anordnung der Öffnungen im Rahmen der Erfindung weitgehend variiert werden.

Schließlich können die gedrückten und verdichteten Bereiche grundsätzlich an der Außenseite und/oder der Innenseite des Spannringes gebildet sein, um die gewünschten Materialverfestigungen zu erzielen.

Die Aufgabe wird auch durch ein Verfahren mit den Merkmalen des Anspruchs 7 gelöst. Durch dieses Verfahren kann auf einfache Weise ein erfindungsgemäßer Spannring insbesondere aus einem Federstahl mit guten Festigkeitseigenschaften bei hoher Haltekraft hergestellt werden. Da die Materialausnehmungen in Form der Öffnungen oder Löcher innerhalb des Spannringes und somit nicht als randseitige Ausnehmungen oder Vertiefungen gebildet sind, bleibt eine durchgehende Eingriffskante erhalten.

Nachfolgend wird die Erfindung anhand eines Ausführungsbeispiels unter Bezugnahme auf die Zeichnung näher erläutert. Es zeigt:
- Fig. 1: in einer perspektivischen Draufsicht und im Teilschnitt eine Rohrkupplung mit einer Dichtungsmanschette und einem schematisch dargestellten Spannring an einer Verbindungsstelle zweier Rohre;
- Fig. 2: in einer Schnittansicht die Rohrkupplung der Fig. 1;
- Fig. 3: in einer Schnittansicht den Spannring der Rohrkupplung;
- Fig. 4: in einer Seitendraufsicht den Spannring der Rohrkupplung;
- Fig. 5a: in einer Draufsicht ein einer ebenen Teildarstellung einen erfindungsgemäßen Spannring;
- Fig. 5b: in einer Schnittansicht gemäß der Linie A - A in Fig. 5a den erfindungsgemäßen Spannring;
- Fig. 5c: in einer Vorderansicht den erfindungsgemäßen Spannring der Fig. 5a; und
- Fig. 6: in einer perspektivischen Schnittansicht die Rohrkupplung mit dem erfindungsgemäßen Spannring.

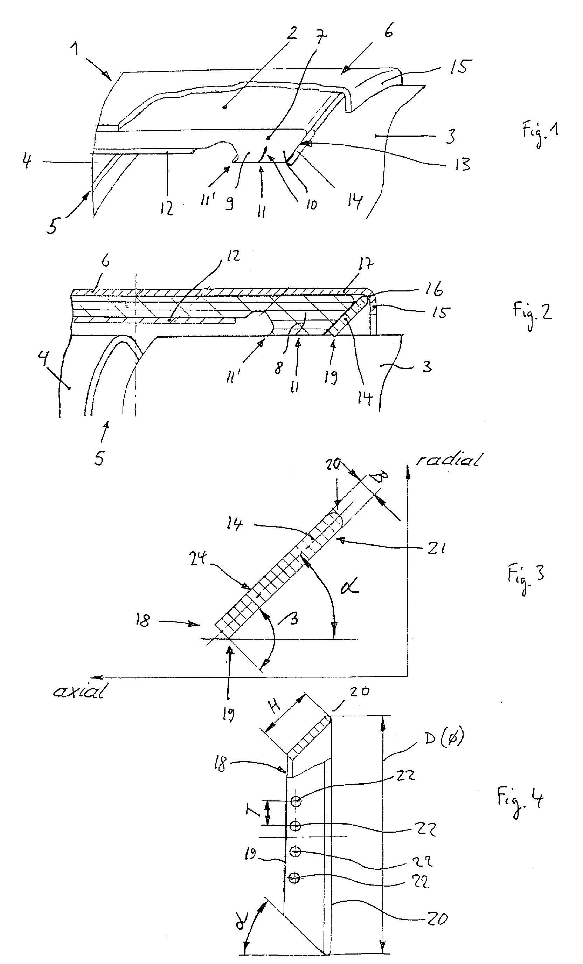

Eine in den Fig. 1 und 2 dargestellte Rohrkupplung 1 mit einer elastomeren Dichtungsmanschette 2 ist grundsätzlich entsprechend der in der EP 0 897 505 B1 und in der EP 0 931 966 B1 beschriebenen Rohrkupplung aufgebaut, wobei die Dichtungsmanschette 2 beispielsweise entsprechend der in der DE 44 08 743 C2 beschriebenen Dichtvorrichtung gebildet ist. Nachfolgend werden die an sich schon bekannten Elemente der Rohrkupplung 1 nur kurz erläutert, ansonsten wird auf die genannten Druckschriften verwiesen.

Die Rohrkupplung 1 ist zum Verbinden und Abdichten von zwei Rohren 3 und 4 einer Rohrleitung in etwa zentrisch zu einer Verbindungsstelle 5 der beiden Rohrenden angeordnet (in Fig. 1 ist der spiegelsymmetrisch ausgebildete rechte Teil der Rohrkupplung dargestellt). In einem Gehäuse 6 ist die Dichtungsmanschette 2 aus elastomerem Werkstoff angeordnet, die an ihren beiden axialen Endbereichen als Abdichtung jeweils einen Ringwulst 7 aufweist. Das Gehäuse 6 ist mit einer Verschlußeinrichtung (hier nicht dargestellt, siehe EP 0 931 966 B1) versehen, so dass es an der vorgesehenen Rohrkupplungs- oder Rohrverbindungsstelle 5 geschlossen und dabei verengt werden kann, wobei die Dichtungsmanschette 2 mit ihren beiden Ringwülsten 7 radial an die Rohre 3 bzw. 4 angedrückt wird. Durch einen ringförmigen, zur Längsachse der Rohrkupplung 1 geneigten Spalt 8 wird jeder Ringwulst 7 in zwei benachbarte Radialwülste 9 und 10 unterteilt, wobei der äußere Radialwulst 10 eine spitzwinkelige, einwärts weisende Dichtlippe 11 bildet. Der innere Ringwulst 9 enthält ebenfalls eine spitzwinklige Dichtlippe 11'. Eine ringförmige Einlage 12, z. B. aus einem Stahlband, hält beim Schließen der Rohrkupplung die Dichtungsmanschette 2 radial beabstandet von den beiden Rohren 3 und 4.

Jede axiale Stirnseite 13 der Dichtungsmanschette 2 ist konisch einwärts zur Längsachse der Rohrkupplung 1 abgeschrägt. An der konischen Ringfläche der Stirnseite 13 liegt ein konisch geformter Spannring 14 aus einem metallischen Werkstoff und insbesondere aus einem Federstahl oder einem gleichartigen Werkstoff an, der zwischen der Dichtungsmanschette 2 und einer radialen Endwand 15 des Gehäuses 6 eingefügt ist und sich axial und radial in einer Kehle 16, die vom zylindrischen Gehäuseteil 17 und der Endwand 15 gebildet ist, abstützt. Der Spannring 14 kann sich alternativ auch an einer ringförmigen Erhebung oder einer Nut (nicht dargestellt) am Gehäuse 6 abstützen. Der Spannring 14 ist an seinem Umfang unterteilt. Seine beiden Enden sind derart voneinander beabstandet, dass sie sich beim Verspannen des Gehäuses 6 nicht überdecken, oder sie sind in alternativer Gestaltung überlappend angeordnet.

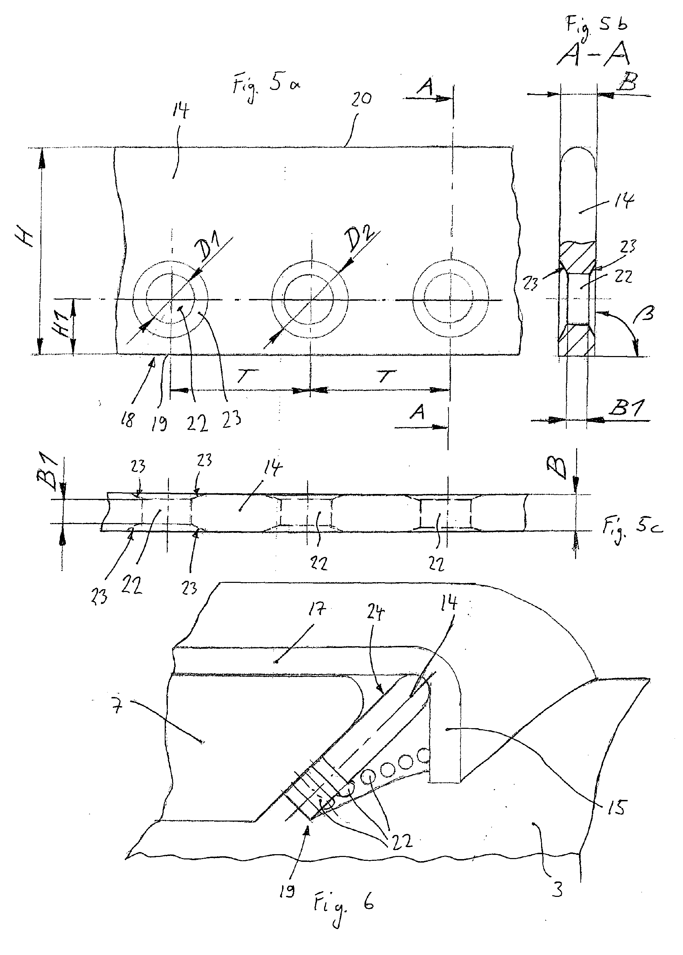

Der Spannring 14 weist an seinem dem Rohr 3 bzw. 4 zugewandten Innenrand 18 eine scharfe Kante 19 zum Eingriff mit dem Umfang des Rohres 3 bzw. 4 auf. Des weiteren bildet er einen Konuswinkel α (siehe Fig. 3 und 4) von zweckmäßigerweise etwa 45°, jedoch kann dieser Winkel auch größer oder kleiner gewählt werden. Der Winkel der konischen Ringfläche der Stirnseite 13 der Dichtungsmanschette 2 gegenüber der Längsachse der Rohrkupplung 1 ist zweckmäßigerweise von ähnlicher Größe. Jedoch muß die Ringfläche nicht streng konisch sein. Sie kann auch einwärts gekrümmt sein, wobei sich der elastische Werkstoff der Dichtungsmanschette 2 dennoch an den Spannring 14 anlegt.

Der Außenrand 20 des Spannringes 14 ist im Längsquerschnitt betrachtet abgerundet und an die Kehle 16 des Gehäuses 6 angepaßt. Der Innenrand 18 des Spannringes 14 ist als eine Umfangsfläche gebildet, die unter einem Winkel β von beispielsweise 90° gegenüber der Außenseite 21 des Spannringes 14 angeordnet ist und somit die äußere Kante oder Außenkante 19 bildet, die am Rohr 3 bzw. 4 im Eingriff ist.

Durch den Spannring 14 ist gewährleistet, dass weder Verschmutzung noch andere unerwünschte oder schädliche Umwelteinflüsse wie UV-Strahlung oder Ozon an die Dichtungsmanschette 2 gelangen können. Der Spannring 14 hat in diesem Fall die Funktion eines Schutzringes. Des weiteren übt der Spannring 14 bei an zwei Rohren 3, 4 verspannter Rohrkupplung 1 Druck in axialer Richtung auf den äußeren Radialwulst 10 aus und verhindert ein Abfließen des elastomeren Werkstoffes durch den Spalt zwischen der Endwand 15 des Gehäuses 6 und dem Rohr 3 bzw. 4 über die Lebensdauer der Dichtungsmanschette 2.

Der Spannring 14 drückt sich beim Schließen des Gehäuses 6 und beim Verspannen der Rohrkupplung 1 mit seiner am Innenrand 18 gebildeten scharfkantigen Außenkante 19 in die Rohroberfläche ein und krallt sich daran fest (siehe Fig. 2). Der Spannring 14 wird dadurch axial am Rohr 3 bzw. 4 festgelegt, so dass die Rohrkupplung 1 relative axiale Bewegungen der beiden Rohre 3 und 4 verhindert. Diese Dichtwirkung bleibt auch bei dynamischem Wechsel des Innendruckes des in der Rohrleitung bzw. den Rohren 3 und 4 enthaltenen Fluids erhalten.

Der erfindungsgemäße Spannring 14 enthält (siehe Fig. 4) beabstandet zu seinem Innenrand 18 Öffnungen oder Löcher 22, die sich durch das Material des Spannringes 14 erstrecken und z. B. in gleichmäßigem Abstand T über den Umfang des Spannringes 14 verteilt sind. Die Löcher 22 weisen z. B. einen runden Querschnitt mit einem Durchmesser D₁ (siehe Fig. 5a) auf, können aber auch z. B. einen ovalen oder auch einen eckigen Querschnitt enthalten. Demzufolge können die Löcher 22 in dem Spannring 14 gebohrt oder auch gestanzt sein.

Der Spannring 14 ist aus einem Materialstreifen einer Breite H (Fig. 5a) durch Rollen hergestellt. Er besteht z. B. aus einem nichtrostenden Federstahl der Qualität 1.4310.

Ein Umfangsrandbereich 23 jedes Loches 22 wird durch Pressen oder Drücken z. B. in der Art einer konischen Ansenkung verformt. Bei dem dargestellten Ausführungsbeispiel weist der ringförmige verformte Umfangsrandbereich 23 eine Ringbreite von (D₂ - D₁)/2 auf. Durch das Drücken wird das Material kaltverformt, wodurch in diesem Bereich eine Verfestigung und Verhärtung des Gefüges erzielt wird.

Zweckmäßigerweise wird das Drücken in einem Arbeitsgang mit dem Ausstanzen der Löcher 22 ausgeführt, kann jedoch auch nach dem Herstellen der Löcher 22 vorgenommen werden.

Wenn die Löcher 22 nahe zum Innenrand 18 des Spannringes 14 angeordnet sind und der verformte Umfangsrandbereich 23 sich in der Nähe des Innenrandes 18 bzw. dessen äußerer Kante 19 befindet, wird durch das gehärtete Materialgefüge auch der Bereich des Spannringes 14 an dem Innenrand 18 bzw. der Kante 19 härter und widerstandsfähiger gemacht, so dass die Halteeigenschaften des Spannringes 14 verbessert sind.

Andererseits ermöglichen die Löcher 22 durch die Schwächung des Materials des Metallstreifens eine Verformbarkeit des flachen Metallbandes oder Metallstreifens durch Rollen, auch wenn das Material ein harter Federstahl ist, der sich ansonsten einer Biegeverformung widersetzt.

Die Kaltverformung kann am Spannring bzw. dem Materialstreifen im Bereich der Löcher 22 einseitig oder beidseitig, d. h. an der Außenseite 21 und/oder an der Innenseite 24 erfolgen, so dass sich die Verfestigung im wesentlichen über die Dicke des Materialstreifens erstreckt.

Die Verformung und Verfestigung kann statt im gesamten Umfangsrandbereich 23 auch nur in einem Abschnitt oder Teilbereich vorgenommen werden, z. B. in der Nähe des Innenrandes 18 bzw. der Eingriffskante 19.

Der erfindungsgemäße Spannring 14 kann somit aufgrund der Schwächung durch die Löcher 22 auch bei hartem und verformungsunwilligem Material in seine konische Form gerollt werden. Dennoch bilden die Umfangsrandbereiche 23 der Löcher 22 insbesondere in der Nähe der Eingriffskante 19 eine Verhärtung des Gefüges und damit eine höhere Festigkeit für den dauerhaften Betrieb des Spannringes 14. Dennoch bleibt die Eingriffskante 19 mit ihrer im Gegensatz zu Zähnen kontinuierlichen Form für einen sicheren und dauerhaften Eingriff am Umgang eines Rohres erhalten.

Sowohl die Anordnung wie auch die Größe der Löcher 22, ihr gegenseitiger Abstand T wie auch ihre Länge quer zur Umfangsrichtung des Spannringes 14 kann bedarfsweise variiert werden. Des weiteren können durch das Pressen oder Drücken statt der konischen Abschrägung auch unterschiedliche Prägeformen hergestellt werden.

### Bezugszeichenliste

- 1: Rohrkupplung
- 2: Dichtungsmanschette
- 3: Rohr
- 4: Rohr
- 5: Verbindungsstelle
- 6: Gehäuse
- 7: Ringwulst
- 8: Spalt
- 9: Radialwulst
- 10: Radialwulst
- 11: Dichtlippe
- 12: Einlage
- 13: Stirnseite
- 14: Spannring
- 15: Endwand
- 16: Kehle
- 17: Gehäuseteil
- 18: Innenrand
- 19: Außenkante
- 20: Außenrand
- 21: Außenseite
- 22: Loch
- 23: Umfangsrandbereich
- 24: Innenseite

## Patentansprüche

1. Spannring einer spannbaren Rohrkupplung zum axialen Verbinden zweier Rohre, wobei der in Umfangsrichtung unterteilte und aus metallischem Werkstoff hergestellte Spannring beim Schließen des Gehäuses der Rohrkupplung mittels einer an seinem Innenrand gebildeten kontinuierlichen Eingriffskante in einen Halteeingriff an der Außenseite des zugeordneten Rohres verspannbar ist,
**dadurch gekennzeichnet,**
**dass** der Spannring (14) Öffnungen (22) aufweist, die benachbart zu seinem Innenrand (18) und über seinen Umfang verteilt angeordnet sind, und dass das Material des Spannrings (14) an den Öffnungen (22) durch Drücken verformt und verfestigt ist.

2. Spannring nach Anspruch 1,
**dadurch gekennzeichnet, dass** auf einer Seite (21 oder 24) oder beiden Seiten (21, 24) des Spannringes (14) an der jeweiligen Öffnung (22) ein insbesondere abgeschrägter Umfangsrandbereich (23) des Materials eingedrückt ist.

3. Spannring nach Anspruch 1 oder 2,
**dadurch gekennzeichnet, dass** die Öffnungen (22) gebohrt oder gestanzt sind.

4. Spannring nach einem der Ansprüche 1 bis 3,
**dadurch gekennzeichnet, dass** die Öffnungen (22) runden oder ovalen Querschnitt aufweisen.

5. Spannring nach einem der Ansprüche 1 bis 4,
**dadurch gekennzeichnet, dass** er aus einem Stahl, insbesondere aus einem nichtrostenden Stahl z. B. der Qualität 1.4310, hergestellt ist.

6. Spannring nach einem der Ansprüche 1 bis 8,
**dadurch gekennzeichnet, dass** die Fläche der Öffnungen (22) und/oder der Abstand (T) der Öffnungen (22) auf die Materialeigenschaften und/oder die Dicke (H) des Spannringes (14) abgestimmt ist.

7. Verfahren zum Herstellen eines konischen Spannrings für eine Rohrkupplung, insbesondere nach einem der Ansprüche 1 bis 6,
**dadurch gekennzeichnet,**
**dass** in einem Metallstreifen (14) voneinander beabstandete Öffnungen (22) benachbart zu einem Längsrand (18) des Metallstreifens (14) hergestellt werden,
**dass** zumindest auf einer Seite (21, 24) des Metallstreifens (14) im Umfangsrandbereich (23) der jeweiligen Öffnung (22) das Material des Metallstreifens (14) gedrückt und **dadurch** verfestigt wird, und
**dass** aus dem Metallstreifen der Spannring (14) derart gerollt wird, dass der den Öffnungen (22) zugeordnete Längsrand einen eine Eingriffskante (19) enthaltenden Innenrand (18) bildet.

8. Verfahren nach Anspruch 7,
**dadurch gekennzeichnet, dass** das Material beim Herstellen der Öffnungen (22) gedrückt wird.

9. Verfahren nach Anspruch 7 oder 8,
**dadurch gekennzeichnet, dass** die Öffnungen (22) durch Bohren oder Stanzen hergestellt werden.
